# EUROPÄISCHE PATENTSCHRIFT

(11) **EP 1 748 861 B1**
(45) Veröffentlichungstag und Bekanntmachung des Hinweises auf die Patenterteilung: **28.03.2018**
(21) Anmeldenummer: 05716524.3
(22) Anmeldetag: 04.04.2005
(51) Int. Cl.: B23K 3/03

(54) **LÖTKOLBEN**
SOLDERING IRON
FER A SOUDER

(30) Priorität: 26.05.2004 DE 202004008391 U
(43) Veröffentlichungstag der Anmeldung: 07.02.2007
(73) Patentinhaber: Apex Brands, Inc., Apex, NC 27539 (US)
(72) Erfinder: ZERWECK, Ralf, 74357 Bönnigheim (DE); MUNZ, Volker, 74397 Pfaffenhofen (DE)
(74) Vertreter: Grünecker Patent- und Rechtsanwälte PartG mbB
(86) Internationale Anmeldenummer: PCT/EP2005/003526
(87) Internationale Veröffentlichungsnummer: WO 2005/118197

(56) Entgegenhaltungen:
- EP-A- 0 386 948
- WO-A1-80/00668
- GB-A- 546 947
- US-A- 3 770 183
- US-B1- 6 563 087

## Beschreibung

Die Erfindung betrifft einen Lötkolben gemäß dem Oberbegriff des Anspruchs 1 mit zumindest einer auswechselbaren Lötspitze und einer diese tragenden Spitzenhalterung mit Griffabschnitt sowie einem an die Spitzenhalterung anschließenden Endgehäuseabschnitt.

Bei solchen aus der Praxis vorbekannten Lötkolben besteht teilweise die Möglichkeit, die Lötspitze von der Spitzenhalterung zu lösen. Dadurch ist die Lötspitze gegen eine andere Lötspitze austauschbar. Dies erfolgt beispielsweise, wenn die Lötspitze verschlissen ist.

Hierbei ist zu beachten, dass ein solcher Austausch nur mit entsprechenden Werkzeugen oder erst nach Abkühlen der Lötspitze möglich ist.

US 6,563,087 B1 offenbart einen Lötkolben gemäß dem Oberbegriff des Anspruchs 1 mit einem Austauschmodul, umfassend eine Spitzenhalterung sowie einen Griff, der auf die Spitzenhalterung abnehmbar aufgeschoben ist. Das Austauschmodul kann mit einem Endgehäuseabschnitt zusammengesteckt werden, wobei der Griff des Austauschmoduls in Kolbenlängsrichtung zwischen einem Flansch der Spitzenhalterung sowie dem Endgehäuseabschnitt angeordnet ist. Nachteilig daran ist, dass sich der Griff relativ zur Spitzenhalterung während des Betriebes drehen lässt, wodurch es zu Verarbeitungsungenauigkeiten mit dem Lötkolben kommen kann. Weiterhin besteht das Risiko, dass sich der Griff während der De- bzw. Montage des Austauschmoduls von der Spitzenhalterung unerwartet löst und sich der Bediener dabei an der heißen Lötspitze verbrennt.

GB 546,947 A offenbart einen Lötkolben mit einer Spitze, die auf einem Schaft lösbar befestigt ist. Der Schaft ist an einem Ende mit einem Griff verschraubt. Ein elektrisches Kabel sowie elektrische Heizmittel verlaufen innerhalb des Griffes sowie des Schaftes zur Spitze.

Der Erfindung liegt die Aufgabe zugrunde, einen Lötkolben mit einem montier- bzw. demontierbaren Austauschmodul dahingehend zu verbessern, dass das Austauschmodul während des Betriebes sowie bei der Montage bzw. bei der Demontage besser handhabbar ist. Diese Aufgabe wird durch die Merkmale des Anspruchs 1 gelöst.

Erfindungsgemäß ist die Spitzenhalterung zusammen mit der Lötspitze als lösbar mit dem Endgehäuseabschnitt verbindbares Austauschmodul ausgebildet. Das heißt, dass nicht die Lötspitze selbst, sondern die diese tragende Spitzenhalterung zum Austausch der Lötspitze vom übrigen Lötkolben, d. h. vom Endgehäuseabschnitt, gelöst wird. Da die Spitzenhalterung mit einem entsprechenden Griffabschnitt ausgebildet ist, kann dieser sowohl zum Lösen der Spitzenhalterung als auch zur Vermeidung einer Verletzung bei noch heißer Lötspitze verwendet werden. Ein separates Werkzeug ist zum Austausch der Lötspitze nicht erforderlich.

Je nach Art des Einsatzes des Lötkolbens besteht die Möglichkeit, dass unterschiedliche Lötspitzen aus unterschiedlichem Material oder mit unterschiedlichen Abmessungen verwendet werden. Entsprechende Lötspitzen können durch unterschiedliche Austauschmodule bereitgestellt werden, so dass während eines Lötvorgangs in einfacher und sicherer Weise die Lötspitzen durch Verwenden eines anderen Austauschmoduls austauschbar sind. Auch in diesem Zusammenhang ist weder ein separates Werkzeug erforderlich noch muss gewartet werden, bis die Lötspitze abgekühlt ist. Im Prinzip kann bei weiter in Betrieb befindlichem Lötkolben ein Wechsel der Austauschmodule stattfinden.

Erfindungsgemäß ist zu beachten, dass die Spitzenhalterung mit Griffabschnitt in der Regel auch einen größeren Durchmesser als eine entsprechende Lötspitze aufweist, so dass manuell einfacher die Spitzenhalterung aufgrund dieses größeren Durchmessers handhabbar und insbesondere lösbar bzw. wieder am Lötkolben befestigbar ist. Aufgrund des größeren Durchmessers sind ebenfalls größere Kräfte sowohl beim Lösen als auch beim Befestigen der Spitzenhalterung am übrigen Lötkolben aufbringbar.

Um bei Handhaben des Lötkolbens zu verhindern, dass die Hand des Benutzers beim Lötvorgang zu nah in Richtung Lötspitze gerät oder gegebenenfalls über den Griffabschnitt in Richtung Lötspitze rutscht, weist der Griffabschnitt an seinem der Lötspitze zuweisenden ersten Ende eine sich radial nach außen erweiternde Grifftulpe auf. Diese kann in der Regel aus dem gleichen Material wie der übrige Griffabschnitt gebildet sein. Es besteht auch die Möglichkeit, dass die Grifftulpe als separates Teil auf der Spitzenhalterung angeordnet und gegebenenfalls mit dem Griffabschnitt verbunden ist.

Die Lötspitze ist in der Spitzenhalterung integriert, so dass das gesamte Austauschmodul bei Verschleiß der Lötspitze ersetzt wird. Dabei ist zu beachten, dass die Kosten für ein solches Austauschmodul nicht wesentlich höher als für nur eine Lötspitze sind.

Um die Lötspitze einerseits aus einem relativ preiswerten Material herstellen zu können und andererseits eine lange Lebensdauer der Lötspitze ohne Reaktion mit Lötmittel oder dergleichen zu ermöglichen, kann die Lötspitze an ihrem Lötende ein lötaktives Material aufweisen.

Zwar ist durch die entsprechenden Abmessungen der Spitzenhalterung mit Griffabschnitt schon weitestgehend gewährleistet, dass selbst bei heißer Lötspitze ein Wechseln des Austauschmoduls möglich ist. Allerdings kann diese Möglichkeit noch weiterhin verbessert werden, wenn der Griffabschnitt ein wärmedämmendes Kunststoffmaterial aufweist.

Ein solches Kunststoffmaterial ist beispielsweise auf die übrige Spitzenhalterung aufgeschoben und aufgeschrumpft.

Um während des Lötens und auch beim Auswechseln des Austauschmoduls die Spitzenhalterung und damit die Lötspitze gut halten zu können, kann der Griffabschnitt zumindest über einen Teil seiner Erstreckung in Lötkolbenlängsrichtung anatomisch geformt sein. Eine solche Formung kann durch Griffmulden, Griffrillen oder dergleichen erfolgen. Ebenfalls können reibungserhöhende Vorsprünge oder Vertiefungen im Griffabschnitt ausgebildet sein.

Um einen Übergang zwischen Griffabschnitt und Endgehäuseabschnitt möglichst sicher ausbilden zu können, können diese beiden ineinander gesteckt werden. Eine Möglichkeit in diesem Zusammenhang ist, dass der Griffabschnitt an seinem zweiten Ende einen Einsteckabschnitt zum zumindest teilweisen Einstecken in eine Endöffnung des Endgehäuseabschnitts aufweist. Es besteht ebenfalls die Möglichkeit, dass ein entsprechendes Ende des Endgehäuseabschnitts in eine Öffnung des Griffabschnitts eingesteckt ist. Der Übergang zwischen Griffabschnitt und Endgehäuseabschnitt kann in diesem Bereich in unterschiedlicher Weise ausgebildet sein. Es kann eine Stufe in diesem Bereich vorgesehen sein, die beispielsweise einen taktilen Reiz bewirkt, durch den ein Benutzer bei Handhabung des Lötkolbens feststellen kann, ob er tatsächlich im Griffabschnitt den Lötkolben hält oder gegebenenfalls auch teilweise im Bereich des Endgehäuseabschnitts. Eine solche Stufe kann durch zumindest stellenweise in Umfangsrichtung vorstehende Vorsprünge am Griffabschnitt oder Endgehäuseabschnitt gebildet sein.

Die Verbindung zwischen Endgehäuseabschnitt und Spitzenhalterung kann in unterschiedlicher Weise hergestellt werden. Ein Beispiel ist ein Verschrauben beider Teile. Um allerdings gegebenenfalls die Spitzenhalterung schnell und unkompliziert lösen zu können, können Endgehäuseabschnitt und Spitzenhalterung mittels einer Schnellverbindungseinrichtung lösbar miteinander verbunden sein. Solche Schnellverbindungseinrichtungen sind an sich bekannt und ein Beispiel für eine solche ist ein Bayonettverschluss oder dergleichen.

Ein anderes Beispiel für eine einfache Schnellverbindungseinrichtung ist eine Steckverbindung.

Bei einem Lötkolben ist es unabdingbar, dass die entsprechende Lötspitze auf bestimmte Temperaturen aufgeheizt werden muss, um den eigentlichen Lötvorgang durchführen zu können.

Es besteht in diesem Zusammenhang die Möglichkeit, dass die Heizeinrichtung im Bereich der Lötspitze angeordnet ist und nur eine elektrische Versorgung über Spitzenhalterung und Endgehäuseabschnitt erfolgt. Dazu kann die Steckverbindung eine elektrische Steckverbindung sein.

Ein einfaches Ausführungsbeispiel für eine solche Steckverbindung ist ein vom Griffabschnitt in Kolbenlängsrichtung vorstehender Steckbolzen und eine komplementäre Einsteckhülse im Endgehäuseabschnitt. Die Anordnung kann auch in umgekehrter Weise erfolgen. Weiterhin sind auch Steckverbindungen mit mehr als einem Steckteil und entsprechende Einstecköffnungen oder-hülse möglich. Der Steckbolzen weist in an sich bekannter Weise hintereinander liegende und gegeneinander isolierte Bereiche auf, über die elektrische Energie sicher an die zugeordnete Heizeinrichtung übertragbar ist.

Um ein Einstecken nicht nur des Steckbolzens, sondern auch der Spitzenhalterung in den Endgehäuseabschnitt zu erleichtern, kann die Endöffnung des Endgehäuseabschnitts sich in Richtung Spitzenhalterung konisch erweitern. In entsprechender Weise kann auch das Einsteckende der Spitzenhalterung ausgebildet sein.

Da die Spitzenhalterung in der Regel größere Abmessungen als die eigentliche Lötspitze aufweist, ist diese gut geeignet zur Aufnahme weiterer Einrichtungen des Lötkolbens.

Um nicht nur nahe zur Heizeinrichtung die Temperatur des Lötkolbens zu bestimmen, kann ein Temperatursensor dem Lötende der Lötspitze zugeordnet sein. Dadurch ist nahe benachbart an der eigentlichen Lötstelle die dort vorhandene Temperatur messbar und zur Steuerung und Regelung des Lötkolbens mittels einer entsprechenden Einrichtung verwendbar. Die Daten des oder der Temperatursensoren sind ebenfalls über die elektrische Steckverbindung der entsprechenden Einrichtung mitteilbar. Auch kann die Heizeinrichtung direkt in der Lötspitze angeordnet sein. Ein weiterer Temperatursensor kann innerhalb der Spitzenhalterung angeordnet sein, um beispielsweise bei zu großer Erwärmung des Griffabschnitts die Heizeinrichtung abzuschalten.

In der Praxis ist es möglich, dass eine Reihe der Spitzenhalterungen als Austauschmodule von einem Benutzer verwendet werden. Diese Spitzenhalterungen sind insbesondere einzeln nachkaufbar, um sie mit den übrigen Teilen des Lötkolbens benutzen zu können. Die Erfindung betrifft auch solche Spitzenhalterungen für einen Lötkolben mit den vorangehend beschriebenen Merkmalen.

Im Folgenden wird ein Ausführungsbeispiel der Erfindung anhand der in der Zeichnung beigefügten Figur näher erläutert.

Es zeigt:

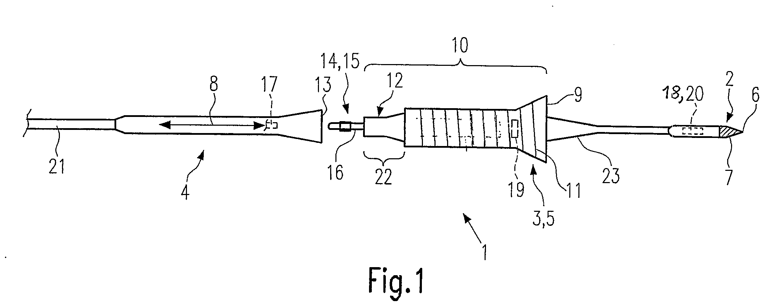

- Figur 1: eine Seitenansicht eines Ausführungsbeispiels eines erfindungsgemäßen Lötkolbens mit austauschbarer Spitzenhalterung.

Figur 1 zeigt eine Seitenansicht eines Ausführungsbeispiels eines erfindungsgemäßen Lötkolbens 1 mit Spitzenhalterung 3. Der Lötkolben 1 weist neben der Spitzenhalterung 3 einen Endgehäuseabschnitt 4 auf, in dem entsprechende elektrische Zuleitungen 21 enden. Diese sind nur teilweise dargestellt und dienen der Zuführung elektrischer Energie von einer dem Lötkolben 1 zugeordneten, nicht dargestellten Steuer- und Überwachungseinrichtung. Außerdem kann eine Temperaturüberwachung des Lötkolbens über dieser elektrischen Zuleitung 21 erfolgen.

Der Endgehäuseabschnitt 4 erstreckt sich im Wesentlichen in Lötkolbenlängsrichtung 8 und weist an seinem der Spitzenhalterung 3 zuweisenden Ende eine Endöffnung 13 auf. Diese verläuft in Richtung Spitzenhalterung konisch erweitert.

Die Spitzenhalterung 3 ist als Austauschmodul 5 ausgebildet. Sie weist die eigentliche Lötspitze 2 sowie einen Griffabschnitt 10 auf. Der Griffabschnitt 10 erstreckt sich zwischen einer Schnellverbindungseinrichtung 14 und der Lötspitze 2.

Die Schnellverbindungseinrichtung 14 ist als Steckverbindung 15 und insbesondere als elektrische Steckverbindung ausgebildet. An dem dargestellten Ausführungsbeispiel umfasst eine solche Steckverbindung 15 einen Steckbolzen 16, der in eine entsprechende Einsteckhülse 17 im Endgehäuseabschnitt 4 einsteckbar ist. Über diese beiden erfolgt die Übertragung elektrischer Energie und gegebenenfalls von Daten oder Signalen.

Der Steckbolzen 16 ist aus in Lötkolbenlängsrichtung 8 hintereinander angeordneten elektrischen Kontaktbereichen gebildet, die voneinander elektrisch isoliert sind und zur Übertragung der beiden Polungen eines elektrischen Gleichstroms zu einer in der Spitzenhalterung 3 oder in der Lötspitze 2 angeordneten Heizeinrichtung 18 dienen.

Innerhalb der Lötspitze 2 ist neben der Heizeinrichtung 18 ein Temperatursensor 20 angeordnet. Dieser dient zur Überwachung der Heizeinrichtung und damit zur Steuerung und gegebenenfalls Regelung der auf die Lötspitze 2 übertragenen Wärmemenge. Entsprechende Signale und Daten des Temperatursensors 20 sind über die Steckverbindung 15 und die elektrischen Zuleitungen 21 an die zugeordnete Steuer- und Überwachungseinrichtung des Lötkolbens 1 übertragbar.

Der Griffabschnitt 10 der Spitzenhalterung 3 erstreckt sich im Wesentlichen zwischen Steckverbindung 15 und Lötspitze 2. Der Griffabschnitt 10 ist aus einem schlecht wärmeleitenden Material gebildet, um auch bei innerhalb der Spitzenhalterung 3 angeordneter Heizeinrichtung 18 den Lötkolben in diesem Bereich sicher handhaben zu können. An seinem der Lötspitze 2 zuweisenden ersten Ende 9 weist der Griffabschnitt 10 eine sich konisch erweiternde Grifftulpe 11 auf.

Integriert mit der Spitzenhalterung 3 ist die Lötspitze 2 ausgebildet, wobei sie an ihrem Lötende 6 mit einem entsprechenden lötaktiven Material 7 ausgebildet ist. Dieses dient einerseits zur guten Wärmeübertragung und andererseits verhindert dieses Material eine Reaktion des Lötmaterials mit der Lötspitze. Nahe dem Lötende 6 kann alternativ zu einem Temperatursensor 19 in der Spitzenhalterung oder auch zusätzlich zu diesem der weitere Temperatursensor 20 angeordnet sein. Dieser dient zur Bestimmung der Temperatur am Lötende 6 der Lötspitze 2. Auch vom Temperatursensor 19 können entsprechende Daten und Signale über Steckverbindung 15 und elektrische Zuleitung 21 an die nicht dargestellte, dem Lötkolben 1 zugeordnete Steuer- und Überwachungseinrichtung übermittelt werden.

Ein dem ersten Ende 9 gegenüberliegendes zweites Ende 12 des Griffabschnitts 10 ist als Einsteckabschnitt 22 ausgebildet. Dieser ist zumindest teilweise entsprechend zur konischen Erweiterung der Endöffnung 13 des Endgehäuseabschnitts 4 ausgebildet und wird zusammen mit dem Steckbolzen 16 in die Endöffnung 13 des Endgehäuseabschnitts 4 zur Schnellverbindung von Spitzenhalterung 3 und Endgehäuseabschnitt eingesteckt. Dabei wird durch den Eingriff des Steckbolzens 16 mit der die Einsteckhülse 17 die elektrische Verbindung zwischen den Einzelteilen des Lötkolbens 1 hergestellt.

Die Lötspitze 2 weist an ihrem dem ersten Ende 9 des Griffabschnitts 10 zuweisenden Ende eine konusförmige Erweiterung 23 auf.

Erfindungsgemäß ist das Austauschmodul 5 als separat zu entsorgendes und auch zu kaufendes Teil ausgebildet. Ist die Lötspitze 2 beispielsweise verschlissen, kann das Austauschmodul 5 entsorgt und durch ein neues ersetzt werden. Auch dieses ist mit dem Endgehäuseabschnitt 4 ohne weitere Anpassungen verwendbar. Weiterhin besteht die Möglichkeit, verschiedene Austauschmodule 5 mit nur einem Endgehäuseabschnitt 4 zu verwenden. Dabei können sich die verschiedenen Austauschmodule 5 beispielsweise in der Formgebung des Lötendes 6, des Materials der Lötspitze bzw. des Lötendes, in der Leistungsfähigkeit der elektrischen Heizeinrichtung 18, in der Anordnung des oder der Temperatursensoren und dergleichen unterscheiden. Solche Austauschmodule sind separat zukaufbar.

Es sei noch angemerkt, dass die Heizeinrichtung 18 auch im Bereich der Lötspitze 2 angeordnet sein kann, siehe beispielsweise die konische Erweiterung 23 oder auch den Bereich der Lötspitze, in dem der weitere Temperatursensor 20 angeordnet ist.

Weiterhin besteht die Möglichkeit, dass insbesondere am Einsteckabschnitt 22 des Griffabschnitts 10 nicht nur die eigentliche elektrische Steckverbindung angebracht ist, sondern auch weiterhin benötigte Anschlusstechnik, eine Zugentlastung oder eine Biegeschutzeinrichtung angeordnet sind.

## Patentansprüche

1. Lötkolben (1) mit zumindest einer auswechselbaren Lötspitze (2) und einer diese tragenden Spitzenhalterung (3) mit Griffabschnitt (10) sowie einem an die Spitzenhalterung (3) anschließenden Endgehäuseabschnitt (4), wobei die Spitzenhalterung (3) mit der Lötspitze (2) als lösbar mit dem Endgehäuseabschnitt (4) verbindbares Austauschmodul (5) ausgebildet ist und der Griffabschnitt (10) an seinem der Lötspitze (2) zuweisenden ersten Ende (9) eine sich radial nach außen erweiternde Grifftulpe (11) aufweist, wobei der Griffabschnitt (10) an seinem zweiten Ende (12) einen Einsteckabschnitt (22) zum zumindest teilweisen Einstecken in eine Endöffnung (13) des Endgehäuseabschnitts (4) aufweist, **dadurch gekennzeichnet, dass**
der Griffabschnitt (10) als Teil des Austauschmoduls (5) auf die Spitzenhalterung (3) aufgeschrumpft oder auf diese aufgespritzt ist und die Lötspitze (2) in der Spitzenhalterung (3) integriert ist.

2. Lötkolben nach Anspruch 1 oder 2, **dadurch gekennzeichnet, dass** die Lötspitze (2) an ihrem Lötende (6) ein lötaktives Material (7) aufweist.

3. Lötkolben nach einem der vorangehenden Ansprüche, **dadurch gekennzeichnet, dass** der Griffabschnitt (10) ein wärmedämmendes Kunststoffmaterial aufweist.

4. Lötkolben nach einem der vorangehenden Ansprüche, **dadurch gekennzeichnet, dass** der Griffabschnitt (10) zumindest über einen Teil seiner Erstreckung in Lötkolbenlängsrichtung (8) anatomisch geformt ist.

5. Lötkolben nach einem der vorangehenden Ansprüche, **dadurch gekennzeichnet, dass** der Endgehäuseabschnitt (4) und die Spitzenhalterung (3) mittels einer Schnellverbindungseinrichtung (14) lösbar miteinander verbunden sind.

6. Lötkolben nach einem der vorangehenden Ansprüche, **dadurch gekennzeichnet, dass** die Schnellverbindungseinrichtung (14) eine Steckverbindung (15) ist.

7. Lötkolben nach einem der vorangehenden Ansprüche, **dadurch gekennzeichnet, dass** die Steckverbindung (15) eine elektrische Steckverbindung ist.

8. Lötkolben nach einem der vorangehenden Ansprüche, **dadurch gekennzeichnet, dass** die Steckverbindung (15) zumindest einen vom Griffabschnitt (10) in Lötkolbenlängsrichtung (8) vorstehenden Steckbolzen (16) und eine komplementäre Einsteckhülse (17) im Endgehäuseabschnitt (4) aufweist.

9. Lötkolben nach einem der vorangehenden Ansprüche, **dadurch gekennzeichnet, dass** die Endöffnung (13) des Endgehäuseabschnitts (4) in Richtung Spitzenhalterung (3) konisch erweitert ist.

10. Lötkolben nach einem der vorangehenden Ansprüche, **dadurch gekennzeichnet, dass** wenigstens eine elektrische Heizeinrichtung (18) und/oder ein Temperatursensor (19, 20) innerhalb der Lötspitze (2) angeordnet ist.

11. Lötkolben nach einem der vorangehenden Ansprüche, **dadurch gekennzeichnet, dass** ein Temperatursensor (19) der Spitzenhalterung (3) zugeordnet ist.

## Claims

1. Soldering iron (1) comprising at least one exchangeable soldering tip (2), and a tip support (3) which carries said tip and has a handle portion (10) and an end housing portion (4) which is connected to the tip support (3), the tip support (3), together with the soldering tip (2), being designed as a replacement module (5) that can be detachably connected to the end housing portion (4), and the handle portion (10) comprising, on the first end (9) thereof which faces the soldering tip (2), a tulip-shaped handle element (11) which widens radially outwards, the handle portion (10) comprising, on the second end (12) thereof, a plug-in portion (22) for plugging into an end opening (13) of the end housing portion (4) at least in part, **characterised in that** the handle portion (10) is shrunk onto or injection-moulded over the tip support (3) as part of the replacement module (5), and the soldering tip (2) is integrated in the tip support (3).

2. Soldering iron according to either claim 1 or claim 2, **characterised in that** the soldering tip (2) comprises a soldering material (7) on the soldering end (6) thereof.

3. Soldering iron according to either of the preceding claims, **characterised in that** the handle portion (10) comprises a heat-insulating plastics material.

4. Soldering iron according to any of the preceding claims, **characterised in that** the handle portion (10) is anatomically shaped, at least over a portion of the extension thereof in the longitudinal direction (8) of the soldering iron.

5. Soldering iron according to any of the preceding claims, **characterised in that** the end housing portion (4) and the tip support (3) are detachably interconnected by a quick-release coupling device (14).

6. Soldering iron according to any of the preceding claims, **characterised in that** the quick-release coupling device (14) is an insertion connection (15).

7. Soldering iron according to any of the preceding claims, **characterised in that** the insertion connection (15) is an electrical insertion connection.

8. Soldering iron according to any of the preceding claims, **characterised in that** the insertion connection (15) comprises at least one socket pin (16) which protrudes from the handle portion (10) in the longitudinal direction (8) of the soldering iron, and a complementary insert sleeve (17) in the end housing portion (4).

9. Soldering iron according to any of the preceding claims, **characterised in that** the end opening (13) of the end housing portion (4) widens conically towards the tip support (3).

10. Soldering iron according to any of the preceding claims, **characterised in that** at least one electrical heating device (18) and/or a temperature sensor (19, 20) is arranged within the soldering tip (2).

11. Soldering iron according to any of the preceding claims, **characterised in that** a temperature sensor (19) is associated with the tip support (3).

## Revendications

1. Fer à braser (1) appelé communément fer à souder, comprenant au moins une panne de brasage (2) interchangeable et un support de panne (3), qui porte la panne et comporte un tronçon de poignée (10), et comprenant également un tronçon de boitier terminal (4) se raccordant au support de panne (3), fer à braser dans lequel le support de panne (3) est réalisé avec la panne de brasage (2) sous la forme d'un module interchangeable (5) pouvant être relié de manière démontable au tronçon de boitier terminal (4), et le tronçon de poignée (10) présente, à sa première extrémité (9) dirigée vers la panne de brasage (2), une poignée en forme de tulipe (10) s'évasant radialement vers l'extérieur, et
dans lequel le tronçon de poignée (10) présente, à sa deuxième extrémité (12), un tronçon enfichable (22) destiné à être engagé au moins partiellement dans une ouverture d'extrémité (13) du tronçon de boitier terminal (4),
**caractérisé**
**en ce que** le tronçon de poignée (10) en tant que partie du module interchangeable (5), est fretté sur le support de panne (3) ou bien est moulé par injection sur ce dernier, et la panne de brasage (2) est intégrée au support de panne (3).

2. Fer à braser selon la revendication 1,
**caractérisé en ce que** la panne de brasage (2) comporte à son extrémité de brasage (6), un matériau (7) actif sur le plan du brasage.

3. Fer à braser selon l'une des revendications précédentes, **caractérisé en ce que** le tronçon de poignée (10) comporte une matière plastique d'isolation thermique.

4. Fer à braser selon l'une des revendications précédentes, **caractérisé en ce que** le tronçon de poignée (10) est d'une forme anatomique sur au moins une partie de son étendue dans la direction longitudinale (8) du fer à braser.

5. Fer à braser selon l'une des revendications précédentes, **caractérisé en ce que** le tronçon de boitier terminal (4) et le support de panne (3) sont reliés mutuellement de manière démontable au moyen d'un système de liaison rapide (14).

6. Fer à braser selon l'une des revendications précédentes, **caractérisé en ce que** le système de liaison rapide (14) est une liaison par enfichage (15).

7. Fer à braser selon l'une des revendications précédentes, **caractérisé en ce que** la liaison par enfichage (15) est une liaison par enfichage électrique.

8. Fer à braser selon l'une des revendications précédentes, **caractérisé en ce que** la liaison par enfichage (15) présente au moins une broche enfichable (16) faisant saillie du tronçon de poignée (10) dans la direction longitudinale (8) du fer à braser, et une douille d'enfichage complémentaire (17) dans le tronçon de boitier terminal (4).

9. Fer à braser selon l'une des revendications précédentes, **caractérisé en ce que** l'ouverture terminale (13) du tronçon de boitier terminal (4) est évasée de manière conique en direction du support de panne (3).

10. Fer à braser selon l'une des revendications précédentes, **caractérisé en ce qu'**au moins un dispositif de chauffage électrique (18) et/ou un capteur de température (19, 20) est agencé dans la panne de brasage (2) .

11. Fer à braser selon l'une des revendications précédentes, **caractérisé en ce qu'**un capteur de température (19) est associé au support de panne (3).
